# EUROPÄISCHE PATENTSCHRIFT

(11) **EP 2 613 997 B1**
(45) Veröffentlichungstag und Bekanntmachung des Hinweises auf die Patenterteilung: **21.03.2018**
(21) Anmeldenummer: 11748278.6
(22) Anmeldetag: 19.08.2011
(51) Int. Cl.: B62D 65/18

(54) **FÖRDEREINHEIT UND FÖRDERSYSTEM ZUM FÖRDERN VON FAHRZEUGKAROSSERIEN SOWIE ANLAGE ZUR BEHANDLUNG VON FARHZEUGKAROSSERIEN**
CONVEYOR UNIT AND CONVEYOR SYSTEM FOR CONVEYING VEHICLE BODIES AND PLANT FOR MACHINING VEHICLE BODIES
UNITÉ DE TRANSPORT ET SYSTÈME DE TRANSPORT POUR TRANSPORTER DES CARROSSERIES DE VÉHICULES, ET INSTALLATION POUR TRAITER DES CARROSSERIES DE VÉHICULES

(30) Priorität: 10.09.2010 DE 102010045010
(43) Veröffentlichungstag der Anmeldung: 17.07.2013
(73) Patentinhaber: Eisenmann SE, 71032 Böblingen (DE)
(72) Erfinder: ROBBIN, Jörg, 72119 Ammerbuch (DE)
(74) Vertreter: Ostertag & Partner Patentanwälte mbB
(86) Internationale Anmeldenummer: PCT/EP2011/004179
(87) Internationale Veröffentlichungsnummer: WO 2012/031680

(56) Entgegenhaltungen:
- DE-C1- 4 292 932
- DE-U1-202007 009 014
- US-A1- 2009 013 524
- US-B2- 6 474 460

## Beschreibung

Die Erfindung betrifft eine Fördereinheit und ein Fördersystem zum Fördern von Fahrzeugkarosserien sowie eine Anlage zur Behandlung von Fahrzeugkarosserien, bei welcher Fahrzeugkarosserien mittels eines Fördersystems zwischen und/oder innerhalb von Behandlungsstationen gefördert werden.

Unter dem Begriff Behandlung soll vorliegend neben einer Oberflächenbehandlung, wie beispielsweise Reinigen oder Lackieren, auch jede Art der Bearbeitung, z.B. Rohbau oder Montage, der Fahrzeugkarosserie verstanden werden.

In vom Markt her bekannten Anlagen zur derartigen Behandlung von Fahrzeugkarosserien werden zu behandelnde Fahrzeugkarosserien häufig auf so genannten Skids zwischen und teilweise auch in einzelnen Behandlungsstationen gefördert. Dabei ist auf jedem Skid eine Fahrzeugkarosserie befestigt, wozu die Fahrzeugkarosserien mit standardisierten Haltebauteilen produziert werden. Bekannt sind solche standardisierten Haltebauteile bei Fahrzeugkarosserien beispielsweise in Form von mit jeweils einer Öffnung versehenen Halteblechen an deren Boden, die häufig mit Verriegelungsbolzen der Skids zusammenarbeiten. Die Skids werden beispielsweise mit Fördereinheiten in Form von Bandförderern oder Rollenbahnförderern, aber auch mit Hängebahnsystemen, transportiert, die gemeinsam ein Fördersystem ausbilden.

In einer Behandlungsanlage kann es vorkommen, dass bis zu 400 und mehr Fahrzeugkarosserien gleichzeitig gefördert werden, wozu eine entsprechende Anzahl von Skids und ein entsprechendes Netz an Band-, Rollenbahn- sowie Hängebahnförderern oder dergleichen erforderlich ist.

Insgesamt ist bei bekannten Anlagen der eingangs genannten Art für die Skids und deren Antrieb eine verhältnismäßig große Menge an Stahl verbaut. Dies treibt insgesamt die Kosten einer solchen Behandlungsanlage in die Höhe. Aus der US 2009/013524 A1 und aus der US 6,474,460 B2 sind Fördereinheiten zum Fördern von Fahrzeugkarosserien nach dem Oberbegriff des Anspruchs 1 bekannt. Es ist daher Aufgabe der Erfindung, eine Fördereinheit, ein Fördersystem und eine Anlage der eingangs genannten Art zu schaffen, die kostengünstiger und zugleich effizient arbeitet.

Diese Aufgabe wird bei einer Fördereinheit nach dem Gegenstand des unabhängigen Anspruchs 1 gelöst. Es ist günstig, wenn die Koppeleinrichtung mehrere Koppelglieder umfasst, welche zwischen einer Tragstellung und einer Ruhestellung bewegbar sind. Vorzugsweise stehen dabei die Koppelglieder in ihrer Tragstellung von oben betrachtet über die lichte Außenkontur der Fördereinheit über und befinden sich in ihrer Ruhestellung von oben betrachtet innerhalb der seitlichen lichten Außenkontur der Fördereinheit, d.h. innerhalb der Begrenzung der Fördereinheit rechts und links zu deren Verfahrrichtung. So kann der Raum, den unbeladene Fördereinheiten einnehmen, gering gehalten werden. Zudem können Fördereinheiten mit ihren Koppelgliedern in deren Ruhestellung beispielsweise raumsparend an andere Fördersysteme herangefahren werden und dort eine Fahrzeugkarosserie von dem anderen Fördersystemen aufnehmen, nachdem die Koppelglieder in ihre Tragstellung gebracht worden sind.

Baulich günstig sind die Koppelglieder als Tragstreben ausgebildet.

Dabei ist es insbesondere von Vorteil, wenn die Tragstreben mittels eines Schwenkantriebs in einer horizontalen Ebene verschwenkbar gelagert sind. In diesem Fall klappen die Tragstreben vorzugsweise nach außen in ihre Tragstellung.

Es ist zudem vorteilhaft, wenn die Koppelglieder vertikal zwischen einem untersten Höhenniveau und einen obersten Höhenniveau verfahrbar sind. Dies trägt dem Gedanken Rechnung, dass eine Fahrzeugkarosserie von einem anderen Fördersystem übernommen oder an ein anderes Fördersystem übergeben werden soll.

In diesem Fall ist es besonders günstig, wenn die Koppeleinrichtung derart eingerichtet ist, dass sie mit Bodenbereichen der Dach oben ausgerichteten Fahrzeugkarosserie zusammenarbeitet, in oder an denen keine standardisierten Haltebauteile der Fahrzeugkarosserie vorgesehen sind. So kann die Fahrzeugkarosserie beispielsweise von einem standardisierten Skid abgenommen oder auf einen solchen aufgesetzt werden.

Die oben genannte Aufgabe wird bei einem Fördersystem der eingangs genannten Art dadurch gelöst, dass wenigstens eine Fördereinheit mit einigen oder allen der oben erläuterten Merkmale vorhanden ist.

Eine sichere Streckenführung der Fördereinheit oder mehrerer Fördereinheiten ist gewährleistet, wenn die wenigstens eine Fördereinheit auf einem Schienensystem verfahrbar ist.

Bei einem derartigen Fördersystem ist es vorteilhaft, wenn es mehrere individuell steuerbare Fördereinheiten umfasst. Auf diese Weise können verschiedene Fahrzeugkarosserien mit jeweils einer Fördereinheit individuell verfahren werden.

Im Hinblick auf die Anlage der eingangs genannten Art wird die oben genannte Aufgabe mit den entsprechenden Vorteilen dadurch gelöst, dass die Anlage ein solches Fördersystem mit einigen oder allen dazu genannten Merkmalen umfasst.

Nachstehend wird ein Ausführungsbeispiel der Erfindung anhand der Zeichnungen näher erläutert. In diesen zeigen:
- Figur 1: eine perspektivische Darstellung eines Teils einer Anlage zur Behandlung von Fahrzeugkarosserien, bei welcher diese mittels eines Fördersystems gefördert werden, wobei ein Abschnitt eines Trockners, ein Abgabeende eines durch den Trockner führenden Kettenförderers, eine Pufferzone des Fördersystems mit zwei Puffersträngen für Fahrzeugkarosserien und mehrere auf Schienen verfahrbare Fördereinheiten gezeigt sind;

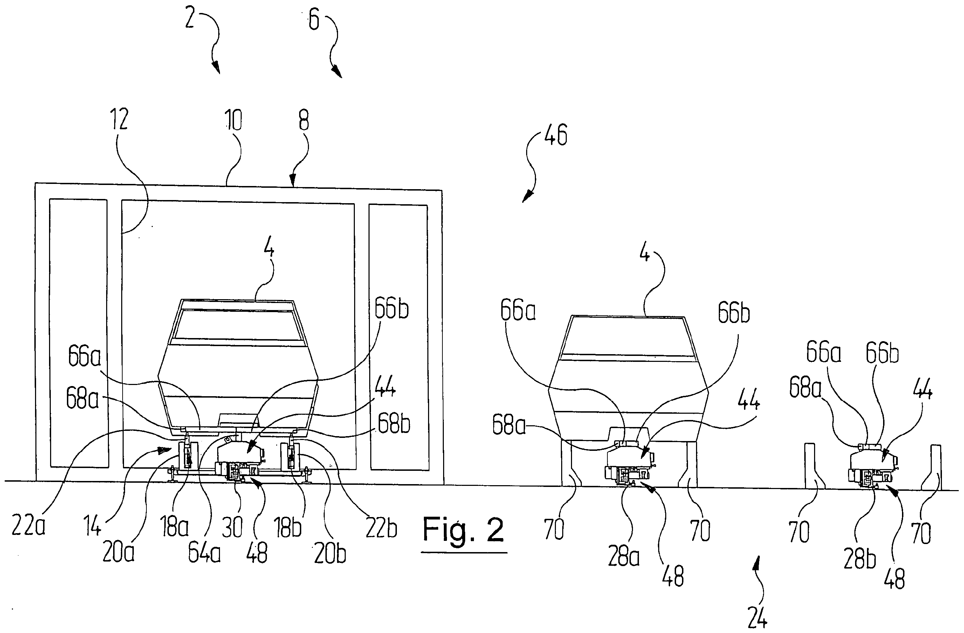

- Figur 2: einen Schnitt der Anlage von Figur 1 entlang der dortigen Schnittlinie II-II mit Blick auf den Trockner und die Pufferzone;
- Figur 3: in vergrößerten Maßstab einen Ausschnitt von Figur 2 im Bereich des Trockners, so dass eine der Fördereinheiten in einer Ansicht von vorne zu erkennen ist;

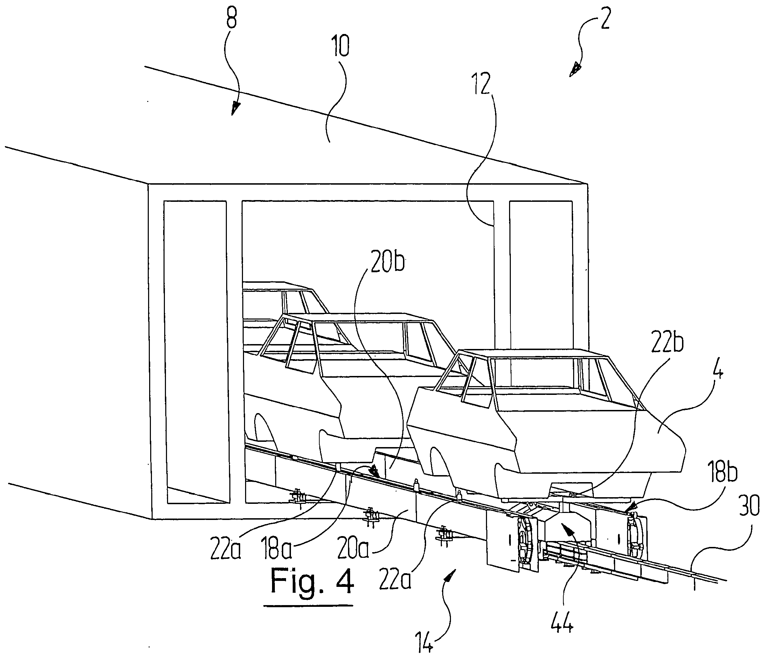

- Figur 4: eine perspektivische Ansicht des Abgabeendes des Kettenförderers, wo die Fahrzeugkarosserien von jeweils einer Fördereinheit übernommen werden;
- Figur 5: eine perspektivische Ansicht einer Fördereinheit im Bereich des Abgabeendes des Kettenförderers ohne Fahrzeugkarosserie, wobei vier Tragstreben der Fördereinheit eine Tragstellung einnehmen;
- Figur 6: eine der Figur 5 entsprechende perspektivische Ansicht einer Fördereinheit auf einem Pufferstrang der Pufferzone, wobei die vier Tragstreben der Fördereinheit eine Ruhestellung einnehmen;
- Figuren 7A, 7B, 7C, 7D: Frontalansichten einer Fördereinheit, wobei deren Tragstreben in verschiedenen Betriebsstellungen gezeigt sind;
- Figur 8: eine Ansicht von oben auf eine Behandlungsstation, durch welche eine Fahrzeugkarosserie auf einer Fördereinheit gefördert wird;
- Figur 9: eine Ansicht von hinten auf die Behandlungsstation von Figur 8 aus Richtung des dortigen Pfeils IX;

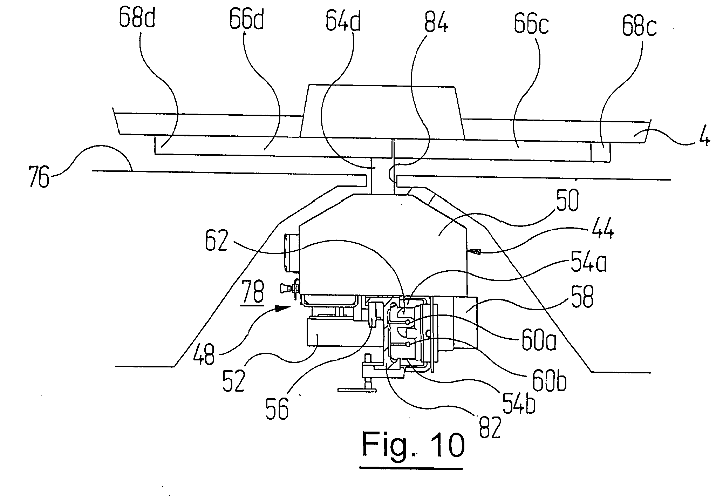

- Figur 10: in vergrößerten Maßstab einen Ausschnitt vom Figur 9, bei dem die dort gezeigte Fördereinheit detaillierter zu erkennen ist.

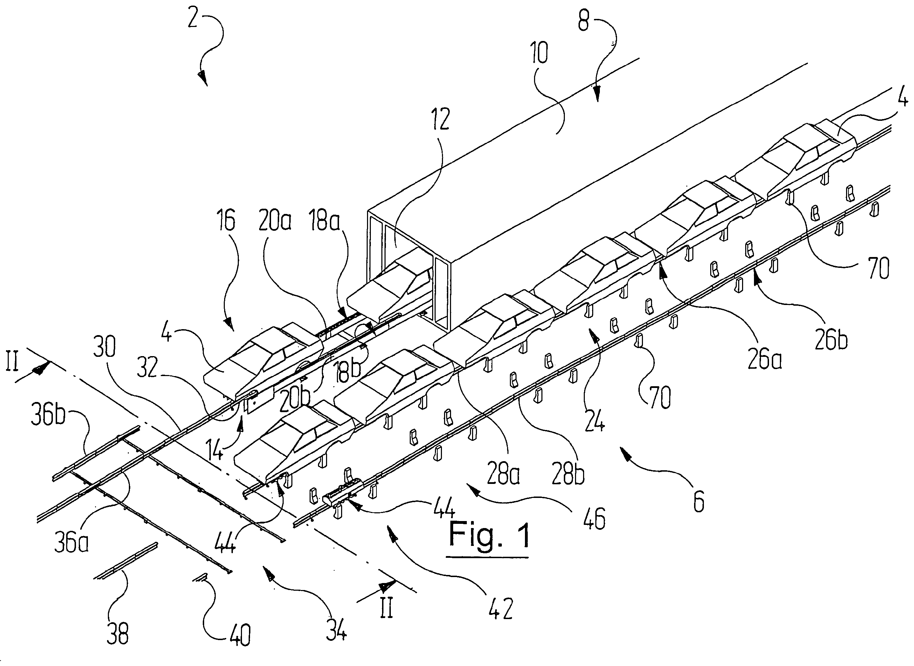

Figur 1 zeigt einen Teilbereich einer Anlage 2 zur Behandlung von Fahrzeugkarosserien 4. In der Anlage 2 werden die Fahrzeugkarosserien 4 mittels eines insgesamt mit 6 bezeichneten Fördersystems zwischen und teilweise auch innerhalb von einzelnen Behandlungsstationen, wie Rohbau, Lackier- und Montagestationen, transportiert.

Beispielhaft für eine Behandlungsstation ist in Figur 1 ein Trockner 8 mit einem Trocknergehäuse 10 gezeigt, welches einen Trockentunnel 12 begrenzt. In dem Trockner 8 wird Lack in an und für sich bekannter Weise auf Fahrzeugkarosserien 4 getrocknet, die in einem vorhergehenden Arbeitsschritt in einer nicht eigens gezeigten Lackierstation mit diesem Lack beschichtet wurden.

Die zu trocknenden Fahrzeugkarosserien 4 werden mittels eines Kettenförderers 14, also nicht mit dem Fördersystem 6, durch den Trockentunnel 12 des Trockners 8 hindurch gefördert. Von dem Kettenförderer 14 ist in Figur 1 ein Abgabeende 16 gezeigt, zu welchem die Fahrzeugkarosserien 4 nach Passieren des Trockentunnels 12 gelangen.

Der Kettenförderer 14 umfasst zwei parallel zueinander umlaufende Förderketten 18a, 18b, welche in jeweils einem Führungsprofil 20a, 20b geführt sind. Die Förderketten 18a, 18b führen Auflagebolzen 22a, 22b mit sich, die mit eingangs angesprochenen standardisierten Haltebauteilen an den Fahrzeugkarosserien 4 zusammenarbeiten, die in Form von mit jeweils einer Öffnung versehenen Halteblechen an deren Boden vorhanden sind. In diese Öffnungen können die Auflagebolzen 22a, 22b mit ihren konischen Enden eingreifen.

Der Abstand zwischen zwei benachbarten Auflagebolzen 22a, 22b jeder Förderkette 18a, 18b ist so gewählt, dass je zwei benachbarte Auflagebolzen 22a, 22b zu zwei entsprechend angeordneten und dimensionierten Haltebauteilen der Fahrzeugkarosserie 4 passen, so dass eine Fahrzeugkarosserie 4 derart auf die Förderketten 18a, 18b aufgesetzt werden kann, dass sie auf je zwei Auflagebolzen 22a bzw. 22b und somit insgesamt vier Auflagebolzen 22a, 22b ruht.

Räumlich neben dem Trockner 8 ist in Figur 1 eine Pufferzone 24 der Anlage 2 gezeigt, die zum Fördersystem 6 zählt. In einer solchen Pufferzone werden bereits bearbeitete bzw. behandelte oder auch unbearbeitete bzw. unbehandelte Fahrzeugkarosserien 4 in einer Warteposition geparkt, bevor sie einer gegebenenfalls weiteren Behandlungsstation zugeführt werden. So kann eine gleichmäßige Durchsatzrate bei mehreren von dem Fördersystem 6 bedienten Behandlungsstationen aufrechterhalten werden.

Die beim vorliegenden Ausführungsbeispiel gezeigte Pufferzone 24 umfasst zwei zueinander parallele geradlinige Pufferstränge 26a, 26b, deren Streckenführung durch eine erste einspurige Pufferschiene 28a bzw. durch eine zweite einspurige Pufferschiene 28b vorgegeben ist.

Parallel zu den Pufferschienen 28a, 28b verläuft eine erste einspurige Förderschiene 30, welche ein Aufnahmeende 32 hat, das mittig zwischen den Führungsprofilen 20a, 20b und damit mittig zwischen den Förderketten 18a, 18b des Kettenförderers 14 in dessen Abgabeende 16 hineinragt.

Das Fördersystem 6 umfasst außerdem ein Querschienenpaar 34, welches im rechten Winkel zu den Pufferschienen 28a, 28b der Pufferstränge 26a, 26b und der ersten Förderschiene 30 verläuft. Auf dem Querschienenpaar 34 können in an und für sich bekannter Art und Weise geradlinige Schienensegmente verfahren werden, von denen in Figur 1 zwei Schienensegmente 36a, 36b gezeigt sind.

Durch die Schienensegmente 36a, 36b kann die erste Förderschiene 30 vervollständigt und die erste Pufferschiene 28a mit einer zweiten Förderschiene 38 und die zweite Pufferschiene 28b mit einer dritten Förderschiene 40 verbunden werden, die entsprechend zu weiteren Behandlungsstationen führen.

An ihrem von der Querförderschienenpaar 32 abliegenden Ende gehen die Pufferschienen 28a, 28b der Pufferstränge 26a, 26b in Förderschienen über, die nicht eigens mit einem Bezugszeichen versehen sind.

Alle angesprochenen Puffer- und Förderschienen 28a, 28b, 30, 38, 40 sowie die Schienensegmente 36a, 36b sind als I-Profil ausgebildet und sind zusammen mit dem Querschienenpaar 34 einen Teil eines Schienensystems, welches insgesamt mit 42 bezeichnet ist. Das Schienensystem 42 umfasst noch weitere, nicht zu erkennende Schienenstränge und verbindet die oben erläuterten verschiedenen Behandlungsstationen miteinander, wobei alle Schienen am Boden der Anlage montiert sind.

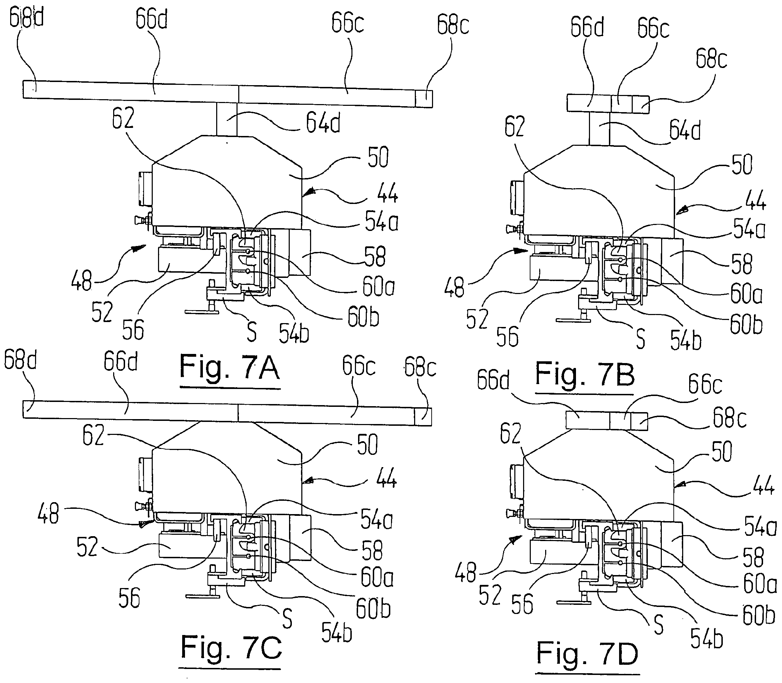

Auf dem Schienensystem 42 bewegen sich mehrere Fördereinheiten 44. Wenn nun nachfolgend von einer Schiene S die Rede ist, wie sie in den Figuren 7A bis 7D gekennzeichnet ist, kann diese durch eine Pufferschiene 28a, 28b, eine Förderschiene 28a, 28b, 30, 38, 40, durch ein Schienensegment 36a, 36b oder durch andere baugleiche Schienen des Schienensystems 42 gebildet sein.

Jede Fördereinheit 44 kann in beide Richtungen entlang einer jeweiligen Schiene S, auf der sich eine bestimmte Fördereinheit 44 befindet, als gesonderte Einheit individuell verfahren werden. Die Anzahl der Fördereinheiten 44 ist an die Anlage 2 angepasst und die vorhandenen Fördereinheiten 44 bilden gemeinsam ein nur in Figur 1 bezeichnetes Antriebssystem 46.

Jede Fördereinheit 44 hat ein die Schiene S umgreifendes Fahrwerk 48, welches im Innern eines Gehäuses 50 angeordneten Laufrollen lagert, welche hier nicht zu erkennen sind und auf der Oberseite der Schienen S abrollen. Diese Laufrollen nehmen die von der Fördereinheit 44 zu tragende Last auf.

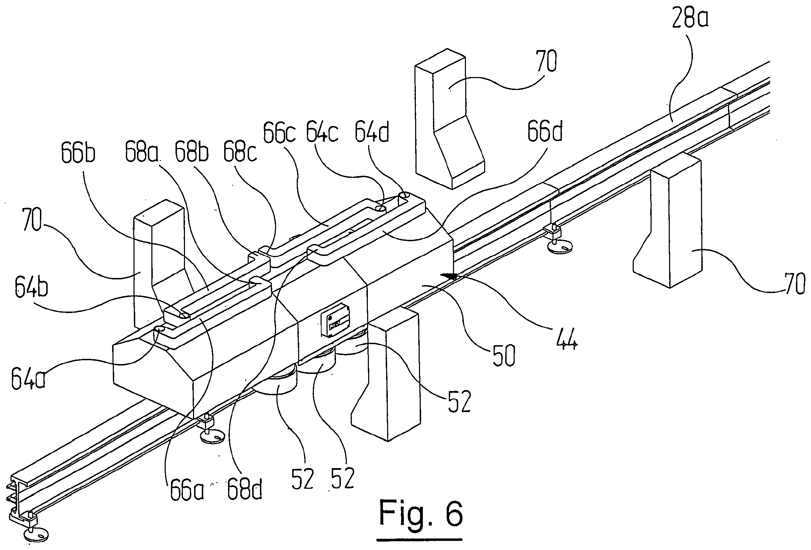

Darüber hinaus greift die Fördereinheit 44 in das I-Profil der Schiene S mittels dreier Pressrollen 52 ein (siehe Figur 6), welche jeweils zusammen mit einem Nabenantrieb eine kompakte Baueinheit bilden. Die Pressrollen 52 verlaufen parallel zu einer horizontalen Transportebene und sind jeweils um eine dazu senkrechte, d.h. vertikale Achse drehbar.

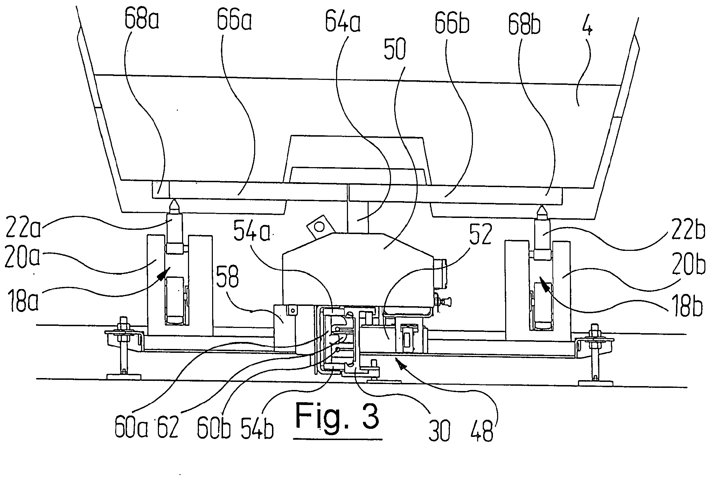

Durch seitliche Führungsrollen 54, 54b, die auf der gegenüberliegenden Seite der Pressrollen 52 einer Schiene S gegen die Schmalflanken des I-Profils der Schiene S anliegen, ist die Fördereinheit 44 daran gehindert, seitlich auszubrechen oder zu verkippen. Dies ist insbesondere in Figur 3 zu erkennen.

In den Figuren 7A bis 7D ist die gegenüber den übrigen Figuren andere Stirnseite der Fördereinheit 44 zu sehen. Dort ist auch eine Stützrolle 56 der Fördereinheit 44 zu erkennen, die auf der Seite der seitlichen Führungsrollen 54, 54b von unten gegen den oberen "Querbalken" des I-Profils der Schiene S anliegt. Hierdurch ist ein Verkippen der Fördereinheit 44 um eine Achse senkrecht zur Fahrtrichtung unterbunden.

Die Fördereinheit 44 umfasst eine Steuerung 58, über welche die Fördereinheit 44 in an und für sich bekannter Weise mittels berührungsloser Datenübertragung, wie z.B. mittels Funk oder induktiver Kommunikation, gesteuert wird. Hierzu umfasste die Anlage 2 eine nicht eigens gezeigte Zentralsteuerung, wie es an und für sich bekannt ist.

Beim vorliegenden Ausführungsbeispiel sind zur Energieversorgung der Fördereinheiten 44 seitlich entlang der Schienen S Linienleiter 60a, 60b angebracht. Bei den Linienleitern 60a und 60b handelt es sich um eine zu einer langen Leiterschleife gestreckte Wicklung, welche mit dem Linienleiter 60a als Hinleitung und dem Linienleiter 60b als Rückleitung eine Schleife beschreibt. Die Energieübertragung erfolgt über eine Spule 62 an der Fördereinheit 44, die in unmittelbarer Nähe der Linienleiter 60a, 60b angeordnet ist, ohne diese zu berühren.

Alternativ können auch an und für sich bekannte Schleifleitungssysteme oder eine autarke Energieversorgung über Akkumulatoren für die Fördereinheiten 44 vorgesehen sein.

Die Pressrollen 52 werden mittels der Steuerung 58 angesteuert, wobei sich die Fördereinheit 44 aufgrund des Reibschlusses der Pressrollen 52 mit der Schiene S entlang dieser bewegt.

Die Absolutposition jeder Fördereinheit 44 innerhalb der Anlage 2 kann durch eine an und für sich bekannte Positionserfassungseinrichtung ermittelt werden, wodurch auch die Position einer von einer bestimmten Fördereinheit 44 bewegten Fahrzeugkarosserie 4 erfasst werden kann.

Aus der Oberseite des Gehäuses 48 der Fördereinheit 44 ragen vier in Richtung einer Schiene S hintereinander angeordnete verdrehbare Achsstummel 64a, 64b, 64c, 64d nach oben heraus, die nachfolgend allgemein mit dem Bezugszeichen 64 bezeichnet werden. Diese tragen an ihrem jeweils vom Gehäuse 50 der Fördereinheit 44 abliegenden Ende verschwenkbare Tragstreben 66a, 66b, 66c, 66d, die sich in einer gemeinsamen horizontalen Ebene erstrecken. Die Tragstreben 66a, 66b, 66c, 66d werden nachfolgend allgemein mit dem Bezugszeichen 66 bezeichnet.

Die Tragstreben 66 dienen als Koppelglieder und tragen jeweils ein Auflageende 68a, 68b, 68c, 68d, auf welche eine Fahrzeugkarosserie 4 aufgesetzt werden kann.

Die Tragstreben 66 können zwischen einer Tragstellung und einer Ruhestellung verschwenkt werden. Hierzu führt die Fördereinheit 44 einen nicht eigens gezeigten Schwenkantrieb mit sich, der mit den Achsstummeln 64 gekoppelt ist und von der Steuerung 58 angesteuert werden kann. Mittels des Schwenkantriebs können die Achsstummel 64 um ihre Längsachse verdreht werden.

Der Schwenkantrieb, die Achsstummel 64 und die Tragstreben 66 mit ihren Auflageenden 68 bilden gemeinsam eine Koppeleinrichtung, die so eingerichtet ist, dass sie mit Bodenbereichen einer Dach oben ausgerichteten Fahrzeugkarosserie 4 zusammenarbeiten kann.

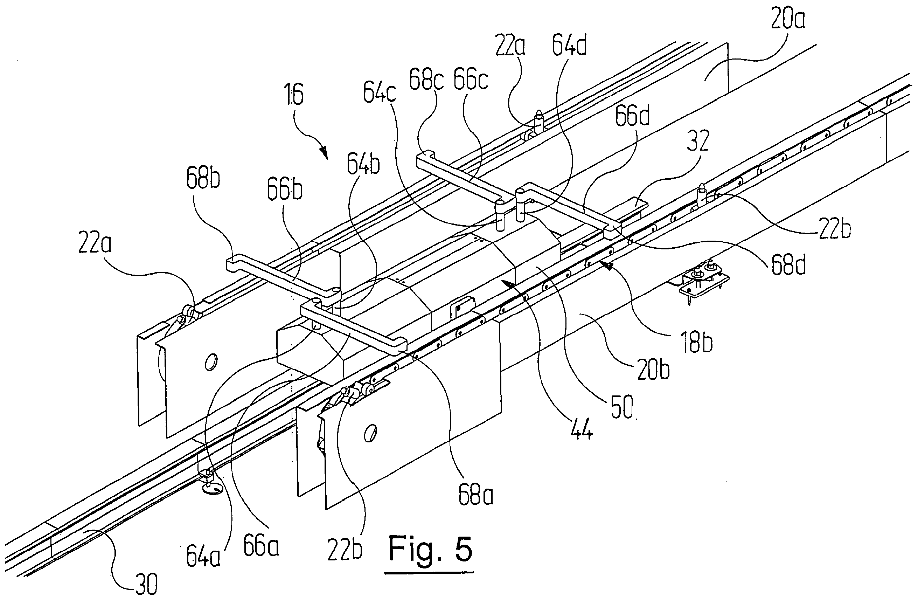

In ihrer Tragstellung ragen die Tragstreben 66 senkrecht zur Fahrrichtung der Fördereinheit 44 nach außen von deren Gehäuse 50 ab und stehen von oben betrachtet über dessen lichte Außenkontur und damit über die lichte Außenkontur der Fördereinheit 44 über. Dies ist in Figur 5 gut zu erkennen. In dieser Stellung der Tragstreben 66 kann eine Fahrzeugkarosserie 4 mit ihren Schwellern auf die Auflageenden 68 der Tragstreben 66 aufgesetzt werden. Die Tragstreben 66 und die Auflageenden 68 sind dabei in ihrer Dimension und Geometrie derart an die zu fördernde Fahrzeugkarosserie 4 angepasst, dass sie mit Bodenbereichen der Fahrzeugkarosserie 4 zusammenarbeiten, die nicht von dem Kettenförderer 14 genutzt werden. Das heißt, die Tragstreben 66 nehmen die Fahrzeugkarosserie 4 insbesondere nicht an oder mit deren standardisierten Haltebauteilen auf.

In ihrer Ruhestellung sind die Tragstreben 66 jeweils parallel zur Fahrrichtung der Fördereinheit 44 ausgerichtet und befinden sich von oben betrachtet innerhalb der lichten Außenkontur des Gehäuses 50 der Fördereinheit 44. Dies ist in Figur 6 gut zu erkennen.

Die Tragstreben 66 können außerdem vertikal zwischen einem untersten Höhenniveau und einen obersten Höhenniveau verfahren werden. Hierzu können die Achsstummel 64 mittels eines entsprechenden Antriebs aus dem Gehäuse 50 der Fördereinheit 44 ein- bzw. ausgefahren werden, welcher von der Fördereinheit 44 mitgeführt und in den Figuren nicht zu erkennen ist.

Dies ist den Figuren 7A bis 7D veranschaulicht. Figur 7A zeigt die Fördereinheit 44 mit hochgefahrenen Tragstreben 66 in ihrer ausgeklappten Tragstellung. In Figur 7B sind die Tragstreben 66 hochgefahren, nehmen jedoch ihre eingeklappte Ruhestellung ein. In Figur 7C sind die Tragstreben 66 nun in ihrer ausgeklappten Tragstellung heruntergefahren, wogegen sie in Figur 7D heruntergefahren sind, jedoch ihre eingeklappte Ruhestellung einnehmen. Auch Positionen zwischen dem untersten und dem obersten Höhenniveau sind möglich. In der Tragstellung können die Tragstreben auch in einem anderen Winkel als 90° von dem Gehäuse 50 der Fördereinheit 44 abragen. So kann die Fördereinheit 44 für verschiedene und insbesondere unterschiedliche Breite Fahrzeugkarosserien benutzt werden, deren Schweller entsprechend in verschiedenen Abständen voneinander vorhanden sind.

Das Prinzip der oben beschriebene Anlage 2 mit dem Schienensystem 42 und dem Antriebssystem 46 wird nun beispielhaft erläutert:
Als Ausgangssituation sei angenommen, dass die Fahrzeugkarosserie 4, die sich in Figur 1 am Abgabeende 16 des Kettenförderers 14 befindet, den Trockner 8 durchfahren hat und der Trockenvorgang abgeschlossen ist.

Im ersten Pufferstrang 26a der Pufferzone 24 sind bereits mehrere Fahrzeugkarosserien 4 zwischengeparkt und ruhen mit ihren Schwellern auf Lagerblöcken 70, welche die erste Pufferschiene 28a zu beiden Seiten flankieren.

Auf der zweiten Pufferschiene 28b befindet sich eine Fördereinheit 44, deren Tragstreben 66 ihre eingeklappte Ruhestellung in der untersten Höhenlage einnehmen, wie es in Figur 7D gezeigt ist.

Um nun die Fahrzeugkarosserie 4 vom Abgabeende 16 des Kettenförderers 14 zu entnehmen, wird zunächst das Schienensegment 36a auf dem Querförderschienenpaar 34 von der ersten Förderschiene 30 zur zweiten Pufferschiene 28b gefahren. Die Fördereinheit 44 fährt dann von der Pufferschiene 28b auf das Schienensegment 36a. Dieses wird nun zusammen mit der darauf befindlichen Fördereinheit 44 zurück zur ersten Förderschiene 30 bewegt.

Die Fördereinheit 44 fährt in den Bereich des Abgabeendes 16 des Kettenförderers 14 hinein, bis sie eine Position etwa mittig unter der Fahrzeugkarosserie 4 einnimmt.

Nun werden die Tragstreben 66 in ihrer Ruhestellung vertikal nach oben in eine obere Zwischenstellung, bis die Tragstreben sich knapp oberhalb des Niveaus der Förderketten 18a, 18b des Kettenförderers 14 befinden. Dann werden die Tragstreben 66 in ihre Tragstellung geklappt, wie es Figur 7C entspricht, so dass sie zwischen die Förderketten 18a, 18b und die Fahrzeugkarosserie 4 gelangen. Nun werden die Tragstreben 66 in ihre oberste Höhenlage gefahren, wie es in Figur 7A gezeigt ist. Dabei kommen die Tragstreben 66 an die Schweller der Fahrzeugkarosserie 4, nehmen diese auf und heben sie synchron von den Auflagebolzen 22a, 22b des Kettenförderers 14 ab.

Gegebenfalls kann jeder Tragstrebe 66a, 66b, 66c, 66d eine eigene oberste Höhenlage zugeordnet sein, um unterschiedlichen Auflagebauteilen einer bestimmten Fahrzeugkarosserie 4 zu genügen.

Die Übergabe der Fahrzeugkarosserie 4 kann zum Einen bei stehendem Kettenförderer 14 erfolgen. Zum Anderen kann die Übergabe jedoch auch bei laufendem Kettenförderer 14 durchgeführt werden, wozu die Fördereinheit 44 unterhalb der Fahrzeugkarosserie 4 synchron mit deren Vortriebsgeschwindigkeit bewegt wird.

Nun wird die Fahrzeugkarosserie 4 vollständig von der Fördereinheit 44 getragen. Die Fördereinheit 44 wird dann zusammen mit der Fahrzeugkarosserie 4 auf das Schienensegment 36b gefahren. Von dort kann die Fahrzeugkarosserie 4 über den von dem Trockner 8 wegführenden Teil der Förderschiene 30 zu einer weiteren Behandlungsstation gefördert werden.

Wenn die Pufferzone 24 nach dem Prinzip "first in - first out" beschickt und entleert wird, wie es bei Pufferzonen häufig der Fall ist, wird die Fahrzeugkarosserie 4 zum zweiten Pufferstrang 26b gefördert. Hierzu wird das Schienensegment 36a über das Querförderschienenpaar 34 wieder zur zweiten Pufferschiene 28b gefahren und führt dabei die Fördereinheit 44 nebst Fahrzeugkarosserie 4 mit sich.

Die Fördereinheit 44 fährt dann mit der Fahrzeugkarosserie 4 so weit auf die zweite Pufferschiene 28b, bis die Fahrzeugkarosserie 4 zentriert über den letzten noch freien vier zusammengehörenden Lagerblöcken 70 zu liegen kommt. Dann werden die Tragstreben 66 der Fördereinheit 44 wieder in ihre unterste Höhenlage gefahren, wobei die Fahrzeugkarosserie 4 auf den entsprechenden Lagerblöcken 70 abgesetzt und von diesen aufgenommen wird. Dann werden die Tragstreben 66 in ihre eingeklappte Ruhestellung gebracht.

Eine Entnahme einer Fahrzeugkarosserie 4 aus der Pufferzone 24 erfolgt entsprechend: Eine Fördereinheit 44 wird in die gewünschte Position unterhalb einer bestimmten zu fördernden Fahrzeugkarosserie 4 gefahren und die Tragstreben 66 werden in die Tragstellung geklappt und hochgefahren. Ein verharren der Tragstreben 66 in einem Zwischenhöhenniveau ist hier nicht erforderlich.

Ebenfalls in analoger Weise wird eine zu trocknende Fahrzeugkarosserie 4 auf den Kettenförderer 14 bewegt: Eine mit einer Fahrzeugkarosserie 4 beladene Fördereinheit 44 fährt dazu in den hier nicht zu erkennenden dem Abgabeende 16 gegenüberliegenden Beladeende ein, bis die Fahrzeugkarosserie so oberhalb der Förderketten 18a, 18b positioniert ist, dass die Öffnungen in den Haltebauteilen der Fahrzeugkarosserie 4 vertikal mit den Auflagebolzen 22a, 22b der Förderketten 18a, 18b fluchten. Nun werden die Tragstreben 66 der Fördereinheit 44 in eine niedrigere Höhenlage gefahren. Bei dieser Abwärtsbewegung greifen die freien Enden der Auflagebolzen 22a, 22b in die entsprechenden Öffnungen der Fahrzeugkarosserie 4 ein und diese wird auf den Auflagebolzen 22a, 22b abgesetzt. Dann werden die Tragstreben 66 in ihre eingeklappte Ruhestellung gebracht und in die unterste Höhenlage bewegt. Die Fördereinheit 44 wird dann an einen weiteren Zielort verfahren, wogegen die Fahrzeugkarosserie 4 nun mittels des Kettenförderers 14 durch den Trockentunnel 12 hindurch gefahren wird. Auch hier kann die Übergabe bei laufendem Kettenförderer 14 erfolgen.

Fahrzeugkarosserien 4, die in der Pufferzone zwischengeparkt werden sollen, können natürlich auch von anderen Behandlungsstationen als dem Trockner 8 kommen.

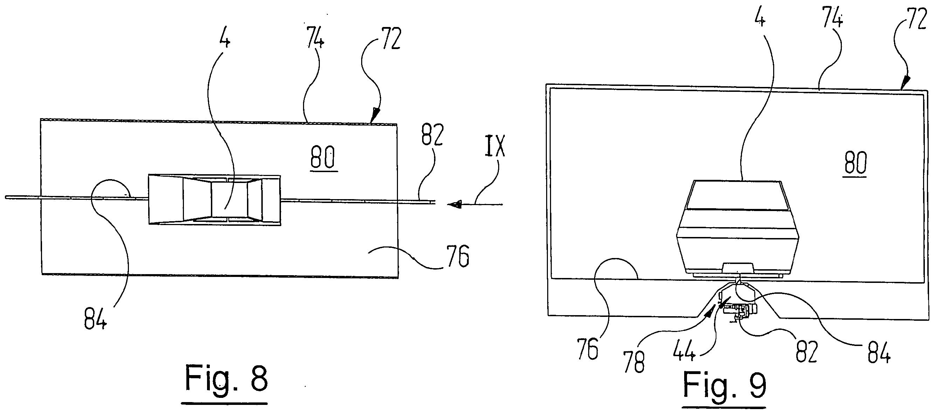

Die Anlage 2 umfasst beispielsweise auch Behandlungsstationen ohne ein eigenes, dieser bestimmten Behandlungsstation zugeordnetes Fördersystem. Dies ist in den Figuren 8 und 9 veranschaulicht, wo eine Behandlungsstation 72 gezeigt ist, durch welche eine Fahrzeugkarosserie 4 mit Hilfe einer Fördereinheit 44 gefördert wird. Die Behandlungsstation 72 kann beispielsweise eine Audit-Station sein, in der das Ergebnis einer vorhergehenden Behandlung begutachtet wird.

Die Behandlungsstation 72 umfasst ein Gehäuse 74 mit einem Boden 76, der einen Förderraum 78 unterhalb des Bodens 76 von einem Behandlungsraum 80 oberhalb des Bodens 76 abtrennt.

Durch den Förderraum 78 erstreckt sich eine Förderschiene 82, die baugleich zu den oben erläuterten Schienen ist. Vertikal oberhalb der Förderschiene 82 weist der Boden 76 der Behandlungsstation 72 einen durchgehenden Schlitz 84 auf, durch welchen die Achsstummel 64 der Fördereinheit 4 hindurch ragen können, wenn die Tragstreben 66 in der obersten Höhenlage sind, so dass die Tragstreben 66 oberhalb des Bodens 76 im Behandlungsraum 80 angeordnet sind.

Auf diese Weise kann die Fahrzeugkarosserie 4 durch die Behandlungsstation 72 bewegt werden, wobei Personen sich neben der Fahrzeugkarosserie 4 auf dem Boden 76 der Behandlungsstation bewegen können.

Es kann Behandlungsstationen geben, bei denen im Förderraum eine Atmosphäre herrscht, welche die Energieversorgung und Steuerung der Fördereinheiten 44 über die Linienleiter 60a, 60b unmöglich machen oder zumindest einschränken. In einer Abwandlung kann daher vorgesehen sein, dass die Fördereinheiten 44 mit einem Schleppsystem, beispielsweise einer im Förderraum 78 umlaufende Kette oder einem Seil, gekoppelt werden kann, welches außerhalb des Förderraums 78 angetrieben werden kann.

Bei einer Abwandlung ist die Fördereinheit 44 so konzipiert, dass auch Kurvenfahrten möglich sind. In diesem Fall kann beispielsweise anstelle der seitlich der Schienen S geführten Pressrollen 52 eine auf der Oberseite der Schienen S laufende Antriebsrolle vorgesehen sein, welche zugleich die Last aufnimmt.

## Patentansprüche

1. Fördereinheit zum Fördern von Fahrzeugkarosserien,
welche verfahrbar ist und ein Fahrwerk (48) und eine mit dem Fahrwerk (48) verbundene Koppeleinrichtung (64, 66, 68) umfasst, welche derart eingerichtet ist, dass sie mit Bodenbereichen der Dach oben ausgerichteten Fahrzeugkarosserie (4) zusammenarbeitet,
**dadurch gekennzeichnet,**
**dass** die Fördereinheit (44) auf einer einspurigen, am Boden einer Anlage montierten Schiene (S) verfahrbar ist, die als I-Profil ausgebildet ist,
**dass** eine auf der Oberseite der Schiene (S) laufende Antriebsrolle vorgesehen ist, welche zugleich die Last aufnimmt, und
**dass** seitliche Führungsrollen (54a, 54b) vorgesehen sind, die gegen die Schmalflanken des I-Profils der Schiene (S) anliegen.

2. Fördereinheit nach Anspruch 1, **dadurch gekennzeichnet, dass** die Koppeleinrichtung (64, 66, 68) mehrere Koppelglieder (66) umfasst, welche zwischen einer Tragstellung und einer Ruhestellung bewegbar sind.

3. Fördereinheit nach Anspruch 2, **dadurch gekennzeichnet, dass** die Koppelglieder (66) in ihrer Tragstellung von oben betrachtet über die lichte Außenkontur der Fördereinheit (44) überstehen und sich in ihrer Ruhestellung von oben betrachtet innerhalb der seitlichen lichten Außenkontur der Fördereinheit (44) befinden.

4. Fördereinheit nach einem der Ansprüche 1 bis 3, **dadurch gekennzeichnet, dass** die Koppelglieder (66) als Tragstreben ausgebildet sind.

5. Fördereinheit nach Anspruch 4, **dadurch gekennzeichnet, dass** die Tragstreben (66) mittels eines Schwenkantriebs in einer horizontalen Ebene verschwenkbar gelagert sind.

6. Fördereinheit nach einem der Ansprüche 1 bis 5, **dadurch gekennzeichnet, dass** die Koppelglieder (66) vertikal zwischen einem untersten Höhenniveau und einen obersten Höhenniveau verfahrbar sind.

7. Fördereinheit nach einem der Ansprüche 1 bis 6 **dadurch gekennzeichnet, dass** Koppeleinrichtung (64, 66 68) derart eingerichtet ist, dass sie mit Bodenbereichen der Dach oben ausgerichteten Fahrzeugkarosserie zusammenarbeitet, in oder an denen keine standardisierten Haltebauteile der Fahrzeugkarosserie (4) vorgesehen sind.

8. Fördersystem zum Fördern von Fahrzeugkarosserien, **dadurch gekennzeichnet, dass** wenigstens eine Fördereinheit (44) nach einem der Ansprüche 1 bis 7 vorhanden ist.

9. Fördersystem nach Anspruch 8, **dadurch gekennzeichnet, dass** die wenigstens eine Fördereinheit (44) auf einem Schienensystem (42) verfahrbar ist.

10. Fördersystem nach Anspruch 8 oder 9, **dadurch gekennzeichnet, dass** es mehrere individuell steuerbare Fördereinheiten (44) umfasst.

11. Anlage zur Behandlung von Fahrzeugkarosserien, bei welcher Fahrzeugkarosserien (4) mittels eines Fördersystems (6) zwischen und/oder innerhalb von Behandlungsstationen (8, 72) gefördert werden, **dadurch gekennzeichnet, dass** die Anlage (2) ein Fördersystem (6) nach einem der Ansprüche 8 bis 10 umfasst.

## Claims

1. Conveying unit for conveying vehicle bodies,
which is movable and comprises a running gear (48) and a coupling device (64, 66, 68) which is connected to the running gear (48) and is configured to cooperate with bottom regions of the vehicle body (4) oriented with the roof at the top,
**characterized in that** the conveying unit (44) is movable on a single-track rail (S) which is mounted on the base of an installation and is configured as an I profile,
**in that** a drive roller running on the top side of the rail (S) is provided, which takes up the load at the same time, and
**in that** lateral guide rollers (54a, 54b) are provided which bear against the narrow flanks of the I profile of the rail (S).

2. Conveying unit according to Claim 1, **characterized in that** the coupling device (64, 66, 68) comprises a plurality of coupling members (66) which are movable between a supporting position and a rest position.

3. Conveying unit according to Claim 2, **characterized in that** the coupling members (66) protrude beyond the clear outer contour of the conveying unit (44), as seen from above, in their supporting position and are located within the lateral clear outer contour of the conveying unit (44), as seen from above, in their rest position.

4. Conveying unit according to one of Claims 1 to 3, **characterized in that** the coupling members (66) are configured as supporting struts.

5. Conveying unit according to Claim 4, **characterized in that** the supporting struts (66) are mounted in a pivotable manner in a horizontal plane by means of a pivot drive.

6. Conveying unit according to one of Claims 1 to 5, **characterized in that** the coupling members (66) are movable vertically between a bottommost height level and a topmost height level.

7. Conveying unit according to one of Claims 1 to 6, **characterized in that** the coupling device (64, 66, 68) is configured to cooperate with bottom regions of the vehicle body oriented with the roof at the top, in or on which regions no standard holding components of the vehicle body (4) are provided.

8. Conveying system for conveying vehicle bodies, **characterized in that** at least one conveying unit (44) according to one of Claims 1 to 7 is provided.

9. Conveying system according to Claim 8, **characterized in that** the at least one conveying unit (44) is movable on a rail system (42).

10. Conveying system according to Claim 8 or 9, **characterized in that** it comprises a plurality of individually controllable conveying units (44).

11. Installation for treating vehicle bodies, in which vehicle bodies (4) are conveyed between and/or within treatment stations (8, 72) by means of a conveying system (6), **characterized in that** the installation (2) comprises a conveying system (6) according to one of Claims 8 to 10.

## Revendications

1. Unité de convoyage affectée au convoyage de carrosseries de véhicules,
qui est apte au déplacement et comprend un train de roulement (48) et un dispositif de couplage (64, 66, 68) relié audit train de roulement (48), et agencé de telle sorte qu'il coopère avec des régions inférieures de la carrosserie (4) d'un véhicule orientée toit en haut,
**caractérisée par le fait**
**que** ladite unité de convoyage (44) peut être déplacée sur un rail (S) à voie unique, posé sur le sol d'une installation et réalisé sous la forme d'un profilé en I,
par la présence d'un rouleau d'entraînement qui roule sur la face supérieure dudit rail (S), et absorbe simultanément la charge, et
par la présence de galets latéraux de guidage (54a, 54b), en applique contre les flancs étroits du profilé en I dudit rail (S).

2. Unité de convoyage selon la revendication 1, **caractérisée par le fait que** le dispositif de couplage (64, 66, 68) inclut plusieurs organes de couplage (66) mobiles entre une position de support et une position de repos.

3. Unité de convoyage selon la revendication 2, **caractérisée par le fait que** les organes de couplage (66) dépassent au-delà du profil extérieur libre de l'unité de convoyage (44) dans leur position de support, considérés par-dessus, et se trouvent dans les limites du profil extérieur latéral libre de ladite unité de convoyage (44) dans leur position de repos, considérés par-dessus.

4. Unité de convoyage selon l'une des revendications 1 à 3, **caractérisée par le fait que** les organes de couplage (66) sont réalisés sous la forme d'entretoises de support.

5. Unité de convoyage selon la revendication 4, **caractérisée par le fait que** les entretoises de support (66) sont montées à pivotement dans un plan horizontal, au moyen d'un entraînement en pivotement.

6. Unité de convoyage selon l'une des revendications 1 à 5, **caractérisée par le fait que** les organes de couplage (66) peuvent être déplacés dans le sens vertical, entre un niveau en hauteur minimal et un niveau en hauteur maximal.

7. Unité de convoyage selon l'une des revendications 1 à 6, **caractérisée par le fait que** le dispositif de couplage (64, 66, 68) est agencé de façon telle qu'il coopère avec des régions inférieures de la carrosserie de véhicule, orientée toit en haut, dans ou sur lesquelles des pièces structurelles normalisées de retenue de ladite carrosserie (4) de véhicule ne sont pas prévues.

8. Système de convoyage conçu pour convoyer des carrosseries de véhicules, **caractérisé par** la présence d'au moins une unité de convoyage (44) conforme à l'une des revendications 1 à 7.

9. Système de convoyage selon la revendication 8, **caractérisé par le fait que** l'unité de convoyage (44), à présence minimale, peut être déplacée sur un système de rails (42).

10. Système de convoyage selon la revendication 8 ou 9, **caractérisé par le fait qu'**il inclut plusieurs unités de convoyage (44) pouvant être commandées individuellement.

11. Installation dévolue au traitement de carrosseries de véhicules, dans laquelle des carrosseries (4) de véhicules sont convoyées, au moyen d'un système de convoyage (6), entre des postes de traitement (8, 72) et/ou à l'intérieur de ces derniers, **caractérisée par le fait que** ladite installation (2) inclut un système de convoyage (6) conforme à l'une des revendications 8 à 10.
